# EUROPEAN PATENT SPECIFICATION

(11) **EP 0 614 776 B1**
(45) Date of publication and mention of the grant of the patent: **11.12.1996**
(21) Application number: 94301485.2
(22) Date of filing: 02.03.1994
(51) Int. Cl.: B60J 10/04, B29C 47/00, E06B 7/23

(54) **Window frame for vehicle door, and manufacturing of the frame**
Fensterrahmen für Fahrzeugtür und seine Herstellung
Chassis de fenêtre et procédé pour sa fabrication

(30) Priority: 04.03.1993 GB 9304411
(43) Date of publication of application: 14.09.1994
(73) Proprietor: Standard Products Limited, Huntingdon Cambridgeshire PE18 6DD (GB)
(72) Inventor: Bickley, Alan Charles, Sawtry, Cambridgeshire PE17 5PQ (GB)
(74) Representative: Jones, Michael Raymond

(56) References cited:
- EP-A- 0 325 828
- DE-A- 3 640 887

## Description

This invention relates to a window frame for a vehicle door, to a method of forming such a frame, and to a vehicle door which includes such a frame.

The construction of a motor vehicle door which includes a window frame with provision for upward and downward movement of a sheet of glazing material is elaborate, time-consuming and expensive.

Various attempts have been proposed to reduce the difficulties associated with the constructional techniques involved but, even though some progress has been made on this front, nonetheless the currently available constructional techniques all have their own short-comings.

One reason for the difficulties associated with constructing a frame of a window of a vehicle door is that often different criteria need to be met in the different regions of the frame, particularly in the regions of the so-called "A" post, the top rail and the "B" post, these being well-known terms in the vehicle construction industry for parts of a vehicle front door window frame. Similar considerations can apply to the frame of a window of a rear door of a vehicle, where one is concerned with the "B" post, the top rail, and the "C" post. Comparable considerations also can apply to the two posts and top rail of a tailgate of an estate car or station wagon, which has an openable window in the tailgate. The term "door" as used herein covers a tailgate.

In one conventional technique for constructing the frame of a window the upper regions of the frame are first formed often by the joining of an inner part and an outer part of the door frame, to define a channel-shaped region, into which is subsequently fitted a conventional elastomeric channel-shaped glass run channel which typically is provided with sealing lips and is provided with flock or some other system to reduce friction between the moving sheet of glazing material and the glass run channel.

According to a first aspect of the present invention, there is provided a frame for a window in a door of a vehicle:
wherein the frame is shaped so as to constitute (i) all three of an "A" post, a top rail and a "B" post, (ii) all three of a "B" post, a top rail and a "C" post, or (iii) all three of two posts and a top rail of a tailgate;
wherein the frame is formed from a single length of rolled metal;
wherein a part of the length of rolled metal, as viewed in cross-section, defines a glass run channel; and
wherein an elastomeric material has been extruded onto at least part of the length of metal, with at least part of the elastomeric material forming a seal, intended in use to abut a reciprocating sheet of glazing material as it moves upwardly and downwardly.

According to a second aspect of the present invention, there is provided a frame for a window in a door of a vehicle:
wherein the frame is shaped so as to constitute (i) all three of an "A" post, a top rail and a "B" post, (ii) all three of a "B" post, a top rail and a "C" post, or (iii) all three of two posts and a top rail of a tailgate;
wherein the frame is formed from a single length of extruded metal;
wherein a part of the length of extruded metal, as viewed in cross-section, defines a glass run channel; and
wherein an elastomeric material has been extruded onto at least part of the length of metal, with at least part of the elastomeric material forming a seal intended in use to abut a reciprocating sheet of glazing material as it moves upwardly and downwardly.

According to a third aspect of the present invention, there is provided a method of forming a frame for a window in a door of a vehicle, in accordance with the first aspect of the present invention, the method comprising:
shaping a strip of a metal to the desired cross-sectional configuration, which includes a glass run channel;
extruding an elastomeric material around at least part of the shaped strip;
cutting the elastomer-bearing shaped strip to the desired length; and
stretch bending the cut strip so that the resulting bent strip includes portions corresponding to (i) all three of an "A" post, a top rail and a "B" post, (ii) all three of a "B" post, a top rail and a "C" post, or (iii) all three of two posts and a top rail of a tailgate, of a vehicle door window frame.

According to a fourth aspect of the present invention, there is provided a method of forming a frame for a window in a door of a vehicle, in accordance with the second aspect of the present invention, the method comprising:
extruding a metal to the desired cross-sectional configuration, which includes a glass run channel;
extruding an elastomeric material around at least part of the extruded strip;
cutting the elastomer-bearing shaped strip to the desired length; and
stretch bending the cut strip so that the resulting bent strip includes portions corresponding to (i) all three of an "A" post, a top rail and a "B" post, (ii) all three of a "B" post, a top rail and a "C" post, or (iii) all three of two posts and a top rail of a tailgate, of a vehicle door window frame.

A fifth aspect of the present invention provides a vehicle door which incorporates a frame according to the first- or second-mentioned aspect of the invention or a frame produced by the method of the third- or fourth-mentioned aspect of the present invention.

The present invention makes it possible to obviate the need to fit subsequently an elastomeric glass run channel to a channel-shaped region of a metal door frame. It also obviates the need, where such has existed, of joining sections of the door frame to each other, usually at the corners of the door frame.

The elastomeric material extruded around at least part of the metal frame of the present invention can act as the glass run channel and other portions of the elastomeric material can also act as a door seal, if required. Alternatively, or in addition, to any such seal portion, a separate door seal component can be secured to the frame, for example within a clamping portion of the frame.

The frame can be formed of any convenient metal, such as a steel or aluminium.

The frame preferably has a tubular portion to give strength to the frame, the tubular portion being equivalent to a conventional hollow all-metal frame around the window in a door, often formed from the inner and outer panels of the door, to which conventionally an elastomeric glass run channel is subsequently secured.

The frame of the present invention can be used in a door where the outer panel (or skin) of the door covers merely the lower half of the door, up to the so-called waist, or it could be used in conjunction with a complete outer door panel (or skin) which covers the whole area below the waist and the regions adjacent the frame around the window. In either case, the outer panel could be a conventional stamped metal panel or it could be a moulded polymeric panel or a formed polymer sheet.

The frame and the outer panel (or skin) can be joined together by welding, by use of a suitable adhesive or by some clip system. The strength of the overall structure, however, is derived from the frame.

The strength of the frame can be further enhanced if it forms part of an inner door module or cassette. A module or cassette could include, in addition to the frame as previously described, other components such as crash protection bars, a window wind mechanism, the sheet of glazing material, a door lock mechanism, and an inner door trim board for the lower region.

It is anticipated that the assembly time on a car assembly line can be significantly reduced by the use of such a pre-assembled module.

When the frame is formed by roll-forming a strip of metal, the metal used in the construction of the frame can be a pre-painted (or primed) metal strip which is rolled formed to the desired cross-section configuration. In particular that configuration is likely to include a tubular portion for the purposes of providing the necessary strength. The paint could cover an area that, in use, is likely to be exposed in the interior of the car and can be colour keyed to suit the interior colours. In such a case the elastomeric material might only cover that area of the metal tube which would allow it to be suitable for use as a glass run channel or as a door seal.

In the production of the frame by roll-forming the metal strip, where one region of the strip is to abut another, additional strength can be provided by welding together such abutting regions, for example by laser welding.

Depending on the nature of the elastomer used in the extrusion around the shaped strip or extruded metal strip, it may at some appropriate stage in the production be necessary to cool the elastomer or to heat the elastomer to effect cross-linking.

Those regions of the elastomeric material which, in use, are likely to come into contact with the moving sheet of glazing material can be treated to minimise friction, for example by the application of flock (and adhesive) or by the application of a low friction coating. The flock, or equivalent, could be applied to the strip as it leaves the elastomer extrusion die, or subsequently. The shaped strip with the elastomeric material extruded thereon can then be cut to the desired length, depending on the requirement of the vehicle door to which it is to be fitted, and the cut strip can then be stretch bent to the required shape and, if necessary, any final cuts can be made at that time.

For a better understanding of the present invention and to show how the same may be carried into effect, reference will now be made, by way of example, to the accompanying drawings, in which:-
Figure 1 is a view of a door which incorporates a frame in accordance with the present invention, the view being of the inside of the door but with the inner trim pad removed;
Figure 2 is a view of the outside of the same door as shown in Figure 1;
Figure 3 is a cross-section through the frame forming part of the door of Figures 1 and 2;
Figure 4 is a cross-section on an enlarged scale, of a metal component of the frame of a door, similar to that shown in Figure 3 but slightly different;
Figure 5 is a cross-section through the metal component of the frame of Figure 4 on to which has been extruded elastomeric material and to which has also been force fitted a sponge door seal;
Figure 6 is a cross-section, on a different scale, of an extruded metal component of the frame of a door, similar to that shown in Figure 4;
Figure 7 is a cross-section through the extruded metal component of figure 6 on to which has been extruded elastomeric material; and
Figure 8 is a cross-section through the components shown in Figure 7, to which has been force fitted a sponge door seal.

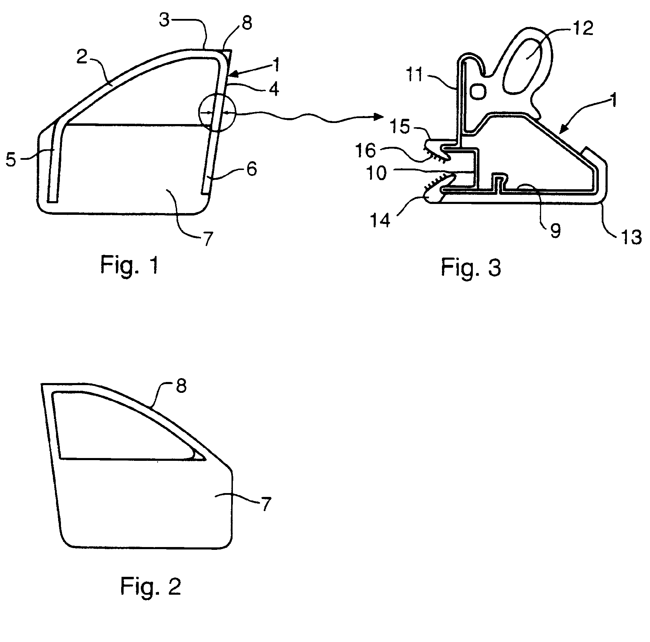

Referring firstly to Figures 1 and 2, the frame in accordance with the present invention is generally indicated by the reference numeral 1. The frame 1 has a portion 2 which serves as an "A" post, a portion 3 which serves as a top rail, a portion 4 which serves as a "B" post, a portion 5 which is a downward extension of the "A" post and a portion 6 which is a downward extension of the "B" post. Secured to the outer side of the frame 1 is an outer door panel generally indicated by the reference numeral 7, the panel 7 having an upper region 8 which generally follows the shape and line of the uppermost portions 2, 3 and 4 of the frame 1.

Referring now to Figure 3, the metal component of the frame is formed from a single strip which has been rolled to the appropriate shape. This metal component of the frame 1 includes a tubular portion 9 for strength as well as a glass run channel 10 and a clamping portion 11 intended to clamp a sponge door seal 12 in place.

Part of the metal component of the frame has extruded over it an elastomeric outer skin 13, at one end region of which (in the cross-sectional view shown in Figure 3) is another co-extruded portion formed from a softer elastomeric material and provided with a lip 14 intended to abut one side of the sheet of glazing material. Mounted on the opposing side wall of the channel-shaped glass run portion 10 is another extruded elastomeric portion 15 provided with a lip intended to abut the opposite face of the sheet of glazing material.

The lips 14 and 15 are provided with flock 16 to reduce friction as the sheet of glazing material is moved upwards or downwards within the frame.

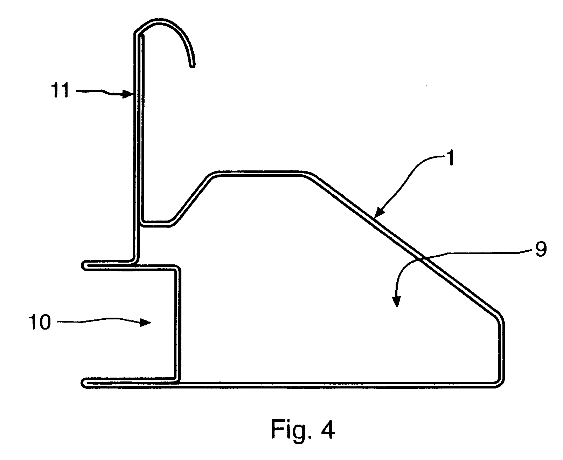

Figure 4 shows an example in more detail of the metal component of the frame. This metal component is substantially the same as that present in the frame shown in Figure 3 except that in the arrangement shown in Figure 4 there is omitted the extra fold shown near the foot of the arrangement in Figure 3. It can be appreciated that the metal component of the frame 1 is formed from a single sheet of metal which has been rolled in the appropriate way so that the configuration indicated in Figure 4 is ultimately achieved. Where two surfaces of the same strip abut each other they can be joined, for example by laser welding, to enhance the strength of the metal core.

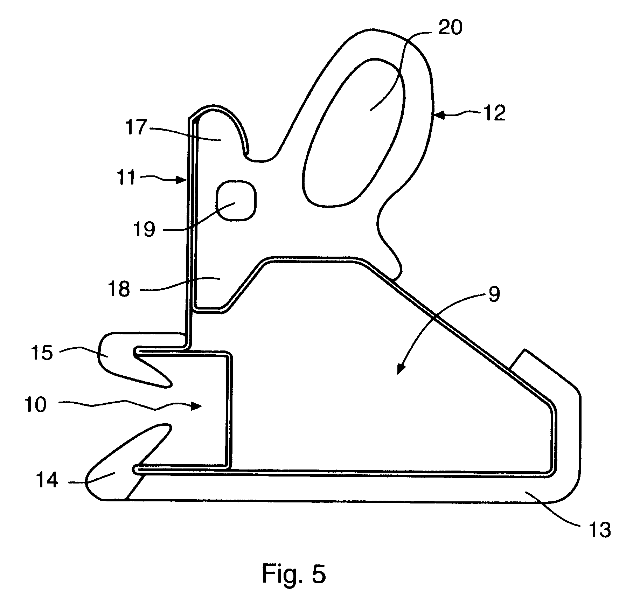

Figure 5 is generally equivalent, but on a larger scale, to what is shown in Figure 3 with identical components bearing the same number as those in Figure 3. The sponge seal 12 has upper limb 17 and a lower limb 18 which are trapped within the extremities of the C-shaped clamping portion 11. The sponge door seal 12 also has two voids 19 and 20 to enhance its flexibility.

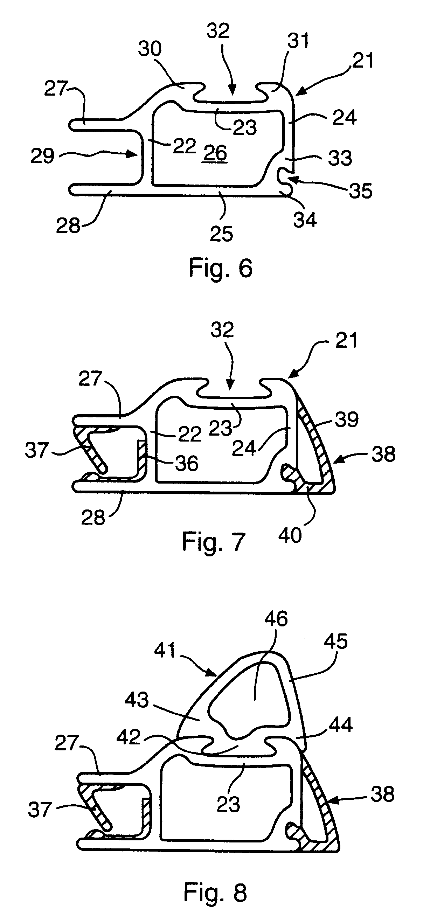

Referring now to Figure 6, there is shown an extruded aluminium metal component generally indicated by the reference numeral 21. A main part of the extruded member 21 is generally oblong and is constituted by four side walls 22, 23, 24 and 25 which enclose a hollow void 26.

Projecting perpendicularly from near one end region of the side wall 22 is a wing 27 and projecting perpendicularly from the side wall 22 in a region adjacent the junction of that side wall with the side wall 25 is another wing 28. The combination of the wing 27, side wall 22 and wing 28 define a U-shaped channel 29 intended to serve as a glass run channel.

Projecting in a curved manner from opposite end regions of the side wall 23 are lips 30 and 31 which are curved towards each other and which, in conjunction with the side wall 23, define a C-shaped channel 32 intended to secure a sponge door seal.

In the region of the junction between the side wall 24 and 25 are two curved lips 33 and 34 which define a relatively small channel 35 intended to assist in the location of a door seal.

After extrusion, the extruded member 21 shown in Figure 6 is passed through an extrusion die head during which an elastomer is co-extruded so as to abut and adhere to different regions of the extruded member 21.

The product resulting from that extrusion is shown in Figure 7. One of the elastomeric components extruded is a generally L-shaped seal 36, part of which adheres to the side wall 22 and another part of which adheres to the wing 28.

Also provided during the elastomeric extrusion process is an angled seal, part of which is secured to the wing 27 and another part 37 of which is angled and projects from the free end region of the wing 27 inwardly into the channel 29. The seal 36 and lip 37 between them serve as a glass run channel in which a reciprocating sheet of glazing material may move upwardly and downwardly. A suitable flock or slip coat may be applied at least to those parts of seal 36 and lip 37 which, in practice, are to contact the sheet of glazing material, but the flock and slip coat are not shown in Figure 7.

In the region of the opposing side wall 24 is a further seal 38 provided during the elastomeric extrusion process. The seal 38 has a long limb 39 which is secured to the extruded member 21 in the region of the junction between the side walls 23 and 24 and extends at an acute angle away from the side wall 24. The long limb 39, at its opposite end region, is integral with, and angled with respect to, a short limb 40, that end region of the limb 40 remote from limb 39 fully occupying the channel 35. The seal 38 is intended, in practice, as a door seal.

Turning now to Figure 8, there is shown a sponge door seal generally indicated by the reference numeral 41 which is fitted at a subsequent stage into the C-channel 32. The sponge door seal 41 has a base 42 shaped so as to be firmly secured within the C-shaped channel 32. The sponge door seal 41 also has two lips 43 and 44 which overlie the curved lips 30 and 31, respectively of the extruded member 21. The sponge door seal 41 also includes a main run 45 which extends from near the lip 43 to near the lip 44 and is arcuate so as to define a significant void 46.

## Claims

1. A frame (1) for a window in a door of a vehicle:
wherein the frame is shaped so as to constitute (i) all three of an "A" post, a top rail and a "B" post, (ii) all three of a "B" post, a top rail and a "C" post, or (iii) all three of two posts and a top rail of a tailgate;
wherein the frame is formed from a single length of rolled metal;
wherein a part of the length of rolled metal, as viewed in cross-section, defines a glass run channel; and
wherein an elastomeric material (13) has been extruded onto at least part of the length of metal, with at least part of the elastomeric material forming a seal (14, 15) intended in use to abut a reciprocating sheet of glazing material as it moves upwardly and downwardly.

2. A frame (1) for a window in a door of a vehicle:
wherein the frame is shaped so as to constitute (i) all three of an "A" post, a top rail and a "B" post, (ii) all three of a "B" post, a top rail and a "C" post, or (iii) all three of two posts and a top rail of a tailgate;
wherein the frame is formed from a single length of extruded metal;
wherein a part of the length of extruded metal, as viewed in cross-section, defines a glass run channel; and
wherein an elastomeric material (13) has been extruded onto at least part of the length of metal, with at least part of the elastomeric material forming a seal (14, 15) intended in use to abut a reciprocating sheet of glazing material as it moves upwardly and downwardly.

3. A frame according to Claim 1 or 2, wherein another part of the elastomeric material is intended to serve as a door seal (12).

4. A frame according to Claim 1, 2 or 3, wherein the metal is aluminium or a steel, and/or wherein the frame has, in cross-section, a closed tubular portion.

5. A frame according to any preceding claim, which also includes, secured to the metal frame, a sponge door seal (12).

6. A method of forming a frame for a window in a door of a vehicle, as claimed in Claim 1, the method comprising:
shaping a strip of a metal to the desired cross-sectional configuration, which includes a glass run channel (10);
extruding an elastomeric material around at least part of the shaped strip;
cutting the elastomer-bearing shaped strip to the desired length; and
stretch bending the cut strip so that the resulting bent strip includes portions corresponding to (i) all three of an "A" post, a top rail and a "B" post, (ii) all three of a "B" post, a top rail and a "C" post, or (iii) all three of two posts and a top rail of a tailgate, of a vehicle door window frame.

7. A method of forming a frame for a window in a door of a vehicle, as claimed in Claim 2, the method comprising:
extruding a metal to the desired cross-sectional configuration, which includes a glass run channel (10);
extruding an elastomeric material around at least part of the extruded strip;
cutting the elastomer-bearing shaped strip to the desired length; and
stretch bending the cut strip so that the resulting bent strip includes portions corresponding to (i) all three of an "A" post, a top rail and a "B" post (ii) all three of a "B" post, a top rail and a "C" post, or (iii) all three of two posts and a top rail of a tailgate, of a vehicle door window frame.

8. A vehicle door which incorporates a frame according to any one of Claims 1 to 5, or a frame produced by a method according to Claim 6 or 7.

9. A vehicle which includes a door according to Claim 8.

## Patentansprüche

1. Rahmen (1) für ein Fenster in einer Fahrzeugtür:
wobei der Rahmen derart geformt ist, daß er bildet (i) alle drei: einen "A"-Pfosten, eine obere Schiene und einen "B"-Pfosten, (ii) alle drei: einen "B"-Pfosten, eine obere Schiene und einen "C"-Pfosten, oder (iii) alle drei: zwei Pfosten und eine obere Schiene einer Heckklappe;
wobei der Rahmen aus einem einzigen Abschnitt gewalzten Metalls geformt ist;
wobei ein Teil des Abschnitts gewalzten Metalls, im Querschnitt gesehen, einen Glasführungskanal definiert; und
wobei ein elastomeres Material (13) auf wenigstens einen Teil des Abschnitts aus Metall extrudiert worden ist, mit einem wenigstens zu einem Teil eine Dichtung (14, 15) formenden elastomeren Material, welche dazu vorgesehen ist, bei Verwendung an eine sich hin- und herbewegende Scheibe eines Verglasungsmaterials anzuliegen, wenn diese sich auf- und abwärts bewegt.

2. Rahmen (1) für ein Fenster in einer Fahrzeugtür:
wobei der Rahmen derart geformt ist, daß er bildet
(i) alle drei: einen "A"-Pfosten, eine obere Schiene und einen "B"-Pfosten, (ii) alle drei: einen "B"-Pfosten, eine obere Schiene und einen "C"-Pfosten, oder (iii) alle drei: zwei Pfosten und eine obere Schiene einer Heckklappe;
wobei der Rahmen aus einem einzigen Abschnitt extrudierten Metalls geformt ist;
wobei ein Teil des Abschnitts extrudierten Materials, im Querschnitt gesehen, einen Glasführungskanal definiert; und
wobei ein elastomeres Material (13) auf wenigstens einen Teil des Abschnitts aus Metall extrudiert worden ist, mit einem wenigstens zu einem Teil eine Dichtung (14, 15) formenden elastomeren Material, welche dazu vorgesehen ist, bei Verwendung an eine hin- und herbewegende Scheibe eines Verglasungsmaterials anzuliegen, wenn diese sich auf- und abwärts bewegt.

3. Rahmen nach Anspruch 1 oder 2, wobei ein anderer Teil des elastomeren Materials dazu vorgesehen ist, als Türdichtung (12) zu dienen.

4. Rahmen nach Anspruch 1, 2 oder 3, wobei das Metall Aluminium oder ein Stahl ist, und/oder wobei der Rahmen, im Querschnitt, einen geschlossenen rohrförmigen Abschnitt hat.

5. Rahmen nach einem der vorhergehenden Ansprüche, welcher ferner, sicher befestigt an dem Metallrahmen, eine Schaumstofftürdichtung (12) einschließt.

6. Verfahren des Formens eines Rahmens für ein Fenster in einer Fahrzeugtür nach Anspruch 1, wobei das Verfahren enthält:
Formen eines Streifens aus Metall zu der gewünschten Querschnittsgestalt, welche einen Glasführungskanal (10) einschließt;
Extrudieren eines elastomeren Materials um wenigstens einen Teil des geformten Streifens;
Schneiden des das Elastomer tragenden geformten Streifens auf die gewünschte Länge; und
Reckbiegen des geschnittenen Streifens, so daß der resultierende gebogene Streifen Abschnitte korrespondierend zu (i) allen dreien: einem "A"-Pfosten, einer oberen Schiene und einem "B"-Pfosten, (ii) allen dreien: einem "B"-Pfosten, einer oberen Schiene und einem "C"-Pfosten, oder (iii) allen dreien: zwei Pfosten und einer oberen Schiene einer Heckklappe eines Fahrzeugtürfensterrahmens einschließt.

7. Verfahren des Formens eines Rahmens für ein Fenster in einer Fahrzeugtür, nach Anspruch 2, wobei das Verfahren enthält:
Extrudieren eines Metalls zu der gewünschten Querschnittsgestalt, welche einen Glasführungskanal (10) einschließt;
Extrudieren eines elastomeren Materials um wenigstens einen Teil des extrudierten Streifens;
Schneiden des das Elastomer tragenden geformten Streifens auf die gewünschte Länge; und
Reckbiegen des geschnittenen Streifens, so daß der resultierende gebogene Streifen Abschnitte korrespondierend zu (i) allen dreien: einem "A"-Pfosten, einer oberen Schiene und einem "B"-Pfosten, (ii) allen dreien: einem "B"-Pfosten, einer oberen Schiene und einem "C"-Pfosten, oder (iii) allen dreien: zwei Pfosten und einer oberen Schiene einer Heckklappe eines Fahrzeugtürfensterrahmens einschließt.

8. Fahrzeugtür, welche einen Rahmen nach einem der Ansprüche 1 bis 5 enthält, oder einen Rahmen, welcher in einem Verfahren nach Anspruch 6 oder 7 gefertigt wurde.

9. Fahrzeug, welches eine Tür nach Anspruch 8 enthält.

## Revendications

1. Cadre de fenêtre (1) dans une porte de véhicule, dans lequel :
- le cadre est mis en forme pour être constitué (i) de trois éléments, à savoir un montant "A", un rail supérieur et un montant "B", (ii) de trois éléments, à savoir un montant "B", un rail supérieur et un montant "C", ou (iii) de trois éléments, à savoir deux montants et un rail supérieur de hayon,
- le cadre est formé à partir d'une seule longueur de métal laminé,
- une partie de la longueur du métal laminé définit, en vue en coupe, un canal de coulissement de glace, et
- un matériau élastomérique (13) a été extrudé sur une partie au moins de la longueur de métal, une partie au moins du matériau élastomérique formant un joint d'étanchéité (14, 15) destiné, en service, à porter contre une feuille de matériau vitreux qui se déplace en va-et-vient lorsqu'elle monte et descend.

2. Cadre de fenêtre (1) dans une porte de véhicule, dans lequel :
- le cadre est mis en forme pour être constitué (i) de trois éléments, à savoir un montant "A", un rail supérieur et un montant "B", (ii) de trois éléments, à savoir un montant "B", un rail supérieur et un montant "C", ou (iii) de trois éléments, à savoir deux montants et un rail supérieur de hayon,
- le cadre est formé à partir d'une seule longueur de métal extrudé,
- une partie de la longueur du métal extrudé définit, en vue en coupe, un canal de coulissement de glace, et
- un matériau élastomérique (13) a été extrudé sur une partie au moins de la longueur de métal, une partie au moins du matériau élastomérique formant un joint d'étanchéité (14, 15) destiné à porter, en service, contre une feuille de matériau vitreux qui se déplace en va-et-vient lorsqu'elle monte et descend.

3. Cadre selon la revendication 1 ou 2, dans lequel une autre partie du matériau élastomérique est destinée à servir de joint (12) d'étanchéité de porte.

4. Cadre selon la revendication 1, 2 ou 3, dans lequel le métal est de l'aluminium ou de l'acier et/ou dans lequel le cadre comporte, vu en coupe, une partie tubulaire fermée.

5. Cadre selon l'une quelconque des précédentes revendications, qui comporte aussi, fixé au cadre de métal, un joint (12) d'étanchéité de porte spongieux.

6. Procédé de fabrication d'un cadre de fenêtre dans une porte de véhicule conforme à la revendication 1, ledit procédé comprenant :
- la mise en forme d'une bande de métal à la configuration de section souhaitée, qui comprend un canal (10) de coulissement de glace,
- l'extrusion d'un matériau élastomérique autour d'une partie au moins de la bande mise en forme,
- la coupe à la longueur voulue de la bande mise en forme et comportant le matériau élastomérique, et
- le pliage avec étirement de la bande coupée pour que la bande pliée résultante comporte des parties qui correspondent (i) à trois éléments, à savoir un montant "A", un rail supérieur et un montant "B", (ii) à trois éléments, à savoir un montant "B", un rail supérieur et un montant "C", ou (iii) à trois éléments, à savoir deux montants et le rail supérieur de hayon, du cadre de fenêtre d'une porte de véhicule.

7. Procédé de fabrication d'un cadre de fenêtre dans une porte de véhicule conforme à la revendication 2, ledit procédé comprenant :
- l'extrusion d'une bande de métal à la configuration de section souhaitée, qui comprend un canal (10) de coulissement de glace,
- l'extrusion d'un matériau élastomérique autour d'une partie au moins de la bande extrudée,
- la coupe à la longueur voulue de la bande mise en forme et comportant le matériau élastomérique, et
- le pliage avec étirement de la bande coupée pour que la bande pliée résultante comporte des parties qui correspondent (i) à trois éléments, à savoir un montant "A", un rail supérieur et un montant "B", (ii) à trois éléments, à savoir un montant "B", un rail supérieur et un montant "C", ou (iii) à trois éléments, à savoir deux montants et le rail supérieur de hayon, du cadre de fenêtre d'une porte de véhicule.

8. Porte de véhicule comportant un cadre conforme à l'une quelconque des revendications 1 à 5 ou un cadre produit par un procédé conforme aux revendications 6 ou 7.

9. Véhicule comportant une porte conforme à la revendication 8.
